# EUROPÄISCHE PATENTANMELDUNG

(11) **EP 2 782 243 A1**
(43) Veröffentlichungstag der Anmeldung: **24.09.2014**
(21) Anmeldenummer: 14075016.7
(22) Anmeldetag: 11.03.2014
(51) Int. Cl.: H02S 10/00

(54) **Photovoltaikvorrichtung**

(30) Priorität: 22.03.2013 DE 102013005698; 22.03.2013 DE 202013003101 U
(71) Anmelder: Kutzner-Panthen, Patrick, 10585 Berlin (DE); Gerlach, Thomas, 12053 Berlin (DE)
(72) Erfinder: Kutzner-Panthen, Patrick, 10585 Berlin (DE); Gerlach, Thomas, 12053 Berlin (DE)
(74) Vertreter: Kietzmann, Manfred

(57) **Zusammenfassung**

Vorgeschlagen wird eine Photovoltaikvorrichtung bei der mindestens zwei Flat-plate-Solarzellenmodule (1) mit den photovoltaischen Zellen zueinander weisend einen Raum (4, 5, 6, 11) aufspannen, in dem Leuchtmittel (3) angeordnet sind, die in den von den Solarzellenmodulen (1) aufgespannten Raum (4, 5, 6, 11) strahlen, wobei durch die Leuchtmittel (3) Licht verschiedener Wellenlänge abgebbar ist und/oder verschiedene Leuchtmittel (3) Licht unterschiedlicher Wellenlänge abgeben, und das in den aufgespannten Raum (4, 5, 6, 11) abgegebene Licht in der Summe auf das gemessene Absorptionsvermögen (Absorptionswellenlänge) der Solarzellen der Solarzellenmodule (1) abgestimmt ist.

## Beschreibung

Die Erfindung betrifft eine Vorrichtung zur Erzeugung von Energie auf photovoltaischer Basis durch Solarzellen.

Allgemein bekannt sind Photovoltaikmodule, die das Licht der Sonne direkt in elektrische Energie umwandeln.

Ein Modul besteht dabei aus miteinander verschalteten Solarzellen, wobei es sich im hiesigen Raum vorrangig um Module des Flat-plate-Typs handelt.

Das Prinzip der Stromerzeugung basiert dabei auf einer gezielten p- und n-Dotierung, durch die ein p-n-Übergang im Innern einer Halbleiterplatte erzeugt wird oder in dem eine p- und eine n-leitende Halbleiterschicht in innigen Kontakt gebracht werden jeweils mit dem Ergebnis, das der Konzentrationsgradient der Ladungsträger zu Differenzströmen führt.

Wenn in diese Übergangszone Photonen einfallen und Elektronen-Loch-Paare erzeugen, werden durch das elektrische Feld (p-n-Übergang) die Löcher zum p-Material beschleunigt und umgekehrt die Elektronen zum n-Kontakt. Auf diese Weise kommt ein Nettostromfluss zustande.

Hohe Wirkungsgrade verlangen, dass möglichst alle Photonen in Elektron-Lochpaare umgewandelt werden und möglichst wenige Ladungsträger rekombinieren.

Hochenergetische Photonen erzeugen dann nicht nur jeweils ein, sondern zwei oder mehr Elektron/Loch-Paare (1). Weiterhin ist aus der DE 10 2009 056 588 B4 eine Photovoltaikvorrichtung bekannt, die mit einer Beleuchtungseinrichtung aus zwei parallel zueinander angeordneten Reihen von Leuchtmitteln arbeitet, deren Wellenlänge nanometergenau aus dem elektronengenetischen Spektrum wählbar ist und die in einer Rechteckanordnung an einem Solarpanel montiert sind, um diese zu beleuchten, wenn die Sonnenstrahlung für eine Stromerzeugung durch die Solarzellen nicht mehr ausreichend ist.

Darüber hinaus beschreiben verschiedene Schutzrechte die Kombination von Lampen und Photovoltaikzellen, um für Beleuchtungszwecke nicht genutztes Licht zur Erzeugung von Energie für andere Zwecke zu verwenden (DE 10 2008 004 586 A1, DE 10 2009 016 890 A1, DE 10 2010 040 398 A1).

Aufgabe der Erfindung ist es, den Nettostromfluss zu erhöhen, indem die Zahl der Elektronen-Loch-Paare vergrößert werden.

Gelöst wird diese Aufgabe mit den Merkmalen der Ansprüche 1 und 11. Vorteilhafte Ausgestaltungen sind Gegenstand der Unteransprüche.

Für eine Photovoltaikvorrichtung mit einem Flat-plate-Solarzellenmodul, der durch mindestens ein Leuchtmittel beleuchtbar ist und dessen Wellenlänge den nutzbaren Spektralanteilen einer Solarzelle angepasst ist, wird erfindungsgemäß vorgeschlagen, dass
mindestens zwei Flat-plate-Solarzellenmodule mit den Solarzellen zueinander weisend einen Raum aufspannen, in dem Leuchtmittel angeordnet sind, die in den von den Solarzellenmodulen aufgespannten Raum strahlen, wobei durch die Leuchtmittel Licht verschiedener Wellenlänge abgebbar ist und/oder verschiedene Leuchtmittel Licht unterschiedlicher Wellenlänge abgeben,
und das in den aufgespannten Raum abgegebene Licht in der Summe auf das gemessene Absorptionsvermögen (Absorptionswellenlänge) der photovoltaischen Zellen der Solarzellenmodule abgestimmt ist.

Bevorzugt übersteigt das in den Raum abgegebene Licht das Absorptionsvermögen der photovoltaischen Zellen. Auf diese Weise wird sichergestellt, dass das Licht der Leuchtmittel hochgradig adsorbiert wird. Durch die räumliche Anordnung vergrössert sich die Anzahl der verfügbaren photovoltaischen Zellen und damit das Leistungsvermögen der Vorrichtung.

Bevorzugt spannen die Flat-plate-Solarzellenmodule einen quaderförmigen oder prismatischen Raum auf mit offenen und/oder geschlossenen Seitenflächen.

Bei einer weiteren Ausführung werden die Leuchtmittel in Leuchtmittelleisten angeordnet, die vorzugsweise die Wände oder Teile davon zwischen zwei gegenüberliegenden Solarzellenmodulen bilden.

Bei einer weiteren Ausführung spannen die Flat-plate-Solarzellenmodule einen flachen spaltförmigen Raum auf, in dem eine Leuchtfolie angeordnet ist.

Die genannten Raumausführungen, gebildet aus gegenüberliegenden Solarzellenmodulen, können turmartig übereinander gestapelt werden. Sie bilden somit eine Solarenergiesäule oder einen Solarturm.

Um dabei zu hohe Belastungen der unteren Räume zu verhindern, sieht eine vorteilhafte Ausführung vor, dass die turmartig angeordneten Räume in ein Traggerüst eingehangen sind oder anderweitig an Stützen befestigt sind.

Bei einer Außenanordnung ist dabei in einer vorteilhaften Ausführung vorgesehen, dass mindestens auch der oberste Solarzellenmodul eines Turmes auch nach außen weisende photovoltaische Zellen aufweist.

Bei der Ausführung mit offenen Seiten von aufgespannten Räumen werden bevorzugt außen Spiegel angeordnet, die Sonnenlicht in das Rauminnere reflektieren.

Bei einer weiteren vorteilhaften Ausgestaltung ist vorgesehen, dass Bestandteil der Solarzellenmodule neben den lichtabsorbierenden Zellen auch thermische Zellen sind oder thermische Zellen als gesonderte Solarzellenmodule angeordnet sind, so dass die Wärmestrahlung ebenfalls verwertbar ist.

Bei einer weiteren Photovoltaikvorrichtung mit einem Flat-plate-Solarzellenmodul, der durch mindestens ein Leuchtmittel beleuchtbar ist, dessen Wellenlänge den nutzbaren Spektralanteilen einer Solarzelle angepasst ist, ist erfindungsgemäß vorgesehen, dass auf dem Flat-plate-Solarzellenmodul mit den photovoltaischen Zellen als Leuchtmittel eine Leuchtfolie, vorzugsweise eine OLED-Folie, vollflächig oder streifenförmig angeordnet ist, wobei durch die Leuchtfolie Licht verschiedener Wellenlänge abgebbar ist und das abgegebene Licht in der Summe auf das gemessene Absorptionsvermögen

(Absorptionswellenlänge) der Solarzellen des Solarzellenmoduls abgestimmt ist.

Vorzugsweise ist auf der Leuchtfolie auf der den photovoltaischen Zellen abgewandten Seite eine Reflexionsschicht angeordnet.

Natürlich können mit Leuchtfolie versehene Solarzellenmodule zu Räumen zusammengefügt oder zu Türmen aufgeschichtet werden, auch in Kombination mit den vorgenannten Räumen aus zwei oder mehr Solarzellenmodulen.

Das Aufbringen der Leuchtfolie und gegebenenfalls einer Reflexionsschicht kann Vorort oder auch bei der Herstellung der Solarzellenmodule vorgenommen werden.

Die Erfindung soll anhand der Zeichnungen erläutert werden. Es zeigen:
- Fig. 1: quaderförmiger Raum mit geschlossenem Mantel,
- Fig. 2: zwei beabstandet gegenüberliegende Solarzellenmodule,
- Fig. 3: einen Solarturm,
- Fig. 4: eine Ansicht eines geschlossenen Raumes von Innen im Schnitt,
- Fig. 5: eine Spiegelanordnung und
- Fig. 6: Solarzellenmodule mit einer Zwischenschicht aus Leuchtfolie.

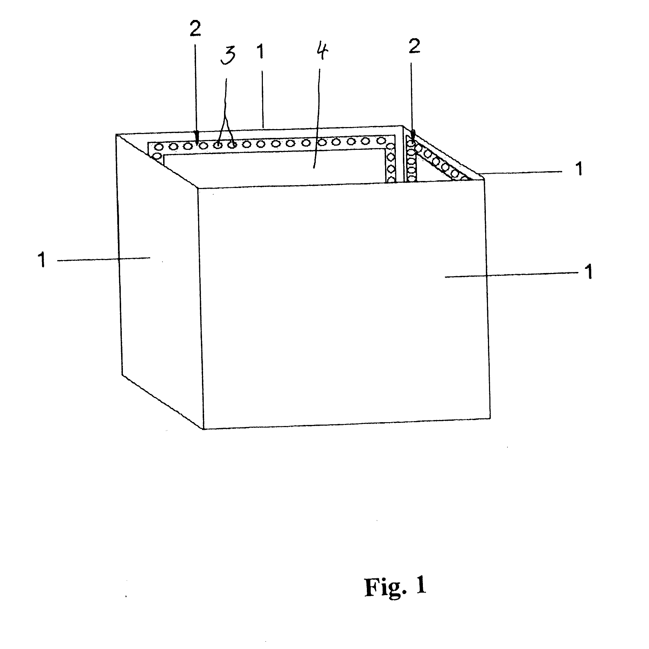

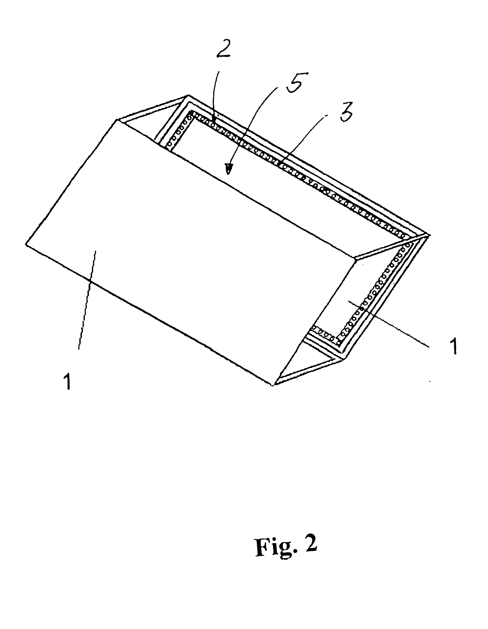

In der **Fig. 1** und der **Fig. 2** werden gezeigt, dass Flat-plate-Solarzellenmodule 1 mit den photovoltaischen Zellen zueinander weisend jeweils einen quaderförmigen Raum 4 bzw. 5 aufspannen, in deren Kantenbereich 2 Leuchtmittel 3 angeordnet sind, die in die von den Solarzellenmodulen 1 aufgespannten Raum 4 und 5 strahlen. Durch die Leuchtmittel 3 wird Licht verschiedener Wellenlänge abgegeben und/oder verschiedene Leuchtmittel 3 geben Licht unterschiedlicher Wellenlänge ab, wobei das in die aufgespannten Räume 4 und 5 abgegebene Licht in der Summe auf das gemessene Absorptionsvermögen (Absorptionswellenlänge) der Solarzellen der Solarzellenmodule 1 abgestimmt ist, vorzugsweise dieses übersteigt.

Die Leuchtmittel 3 werden bevorzugt in Leuchtmittelleisten 7 angeordnet, was die Anbringung in den Räumen 4 und 5 erleichtert.

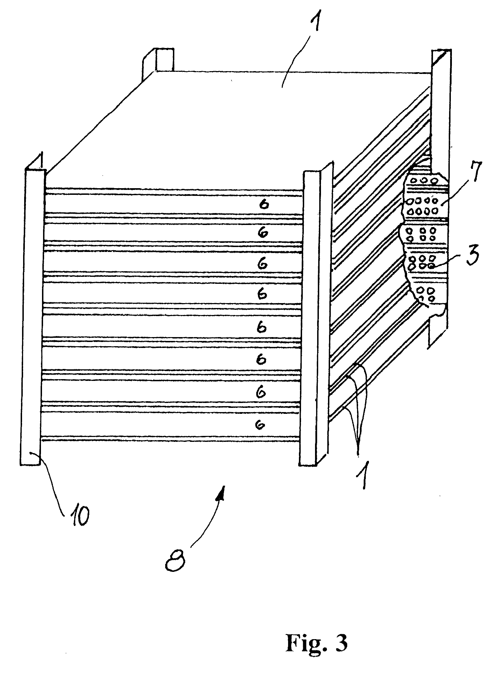

**Fig. 3** zeigt einen Solarturm 8, der gebildet ist aus Solarzellenmodulen 1, die einen geschlossenen Raum 6 aufspannen. Die Räume 6 sind übereinander gestapelt oder in einem Traggerüst 10 eingehangen oder an diesem abgestützt, damit die unteren Räume nicht zu stark auf Druck belastet sind.

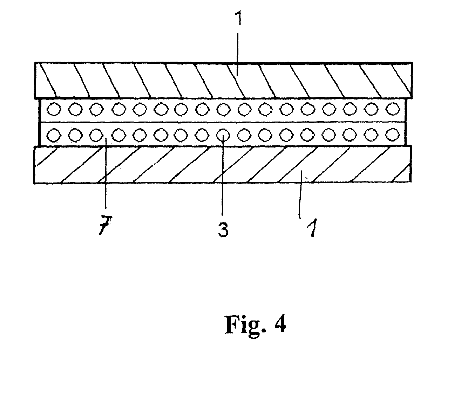

Die Leuchtmittel 3 sind auch hier in Leuchtmitteleisten 7 angeordnet, wobei die Leuchtmittelleisten 7 gleichzeitig die Wände zwischen den gegenüberliegenden Solarzellenmodulen 1 bilden. Dies wird im Detail nochmals in der **Fig. 4****,** einer Ansicht von Innen gegen die mit Leuchtmitteln 3 bestückte Wand, gezeigt.

Der oberste Raum 6 schließt mit einem Solarzellenmodul 1 ab, der auch außen photovoltaische Zellen aufweist, so dass bei einer Anordnung im Freien Sonnenlicht in Energie umwandelbar ist.

Es versteht sich, dass alle Solarzellenmodule 1 schaltungstechnisch miteinander verbunden sind und es einen Anschluss für den Verbraucher gibt.

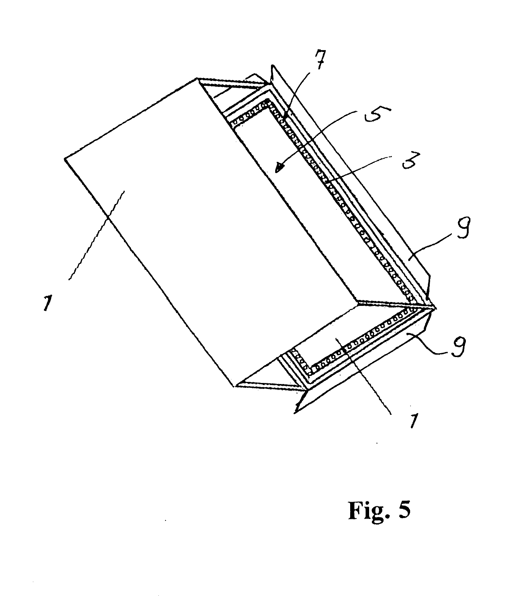

**Fig. 5** zeigt bei einer Solarzellenmodulanordnung 1 mit offenen Seitenflächen, dass die Solarzellenmodule 1 seitlich über vorzugsweise klappbare Spiegel 9 verfügen, über die Sonnenlicht in das Innere der Räume 4, 5 einstrahlbar ist.

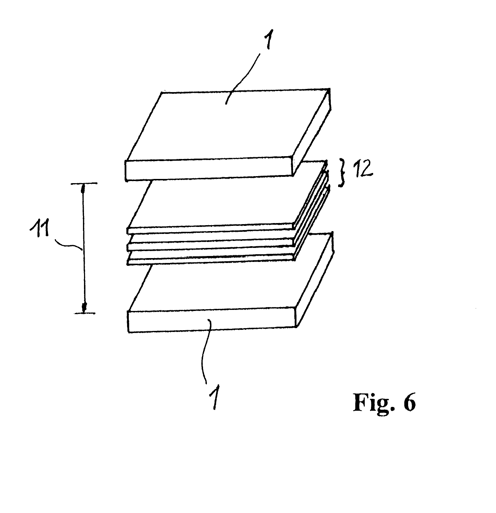

**Fig. 6** zeigt zwei Solarzellenmodule 1 mit einer Zwischenschicht aus Leuchtfolie 12, vorzugsweise aus einer OLED-Folie (organische Leuchtdiodenfolie). Der aufgespannte Raum 11 ist hier somit flach und spaltförmig.

Vorzugsweise wird die Leuchtfolie 12 bereits bei der Herstellung der Solarzellenmodule 1 eingebracht oder nur ein Solarzellenmodul wird mit einer Leuchtfolie versehen und der zweite Solarzellenmodul 1 wird dann bei der Montage einfach auf die Leuchtfolie des anderen aufgelegt.

Eine hohe Packungsdichte lässt sich realisieren, wenn die Solarmodule 1 beidseitig mit photovoltaischen Zellen bestückt sind.

### Bezugszeichenliste

- 1: Solarzellenmodul
- 2: Kantenbereich
- 3: Leuchtmittel
- 4: quaderförmiger Raum mit Mantel aus Solarmodulen
- 5: quaderförmiger Raum mit zwei Solarmodulen
- 6: geschlossene Räume
- 7: Leuchtmittelleisten
- 8: Solarturm
- 9: Spiegel
- 10: Traggerüst
- 11: spaltförmiger Raum
- 12: Leuchtfolie

### Literatur

(1) Eckhard Rebhan: Energiehandbuch. Gewinnung, Wandlung und Nutzung von Energie, Springer-Verlag 2002, S. 326.

## Patentansprüche

1. Photovoltaikvorrichtung mit einem Flat-plate-Solarzellenmodul, der durch mindestens ein Leuchtmittel beleuchtbar ist, dessen Wellenlänge den nutzbaren Spektralanteilen einer Solarzelle angepasst ist, **dadurch gekennzeichnet, dass**
mindestens zwei Flat-plate-Solarzellenmodule (1) mit den photovoltaischen Zellen zueinander weisend einen Raum (4, 5, 6, 11) aufspannen, in dem Leuchtmittel (3) angeordnet sind, die in den von den Solarzellenmodulen (1) aufgespannten Raum (4, 5, 6, 11) strahlen, wobei durch die Leuchtmittel (3) Licht verschiedener Wellenlänge abgebbar ist und/oder verschiedene Leuchtmittel (3) Licht unterschiedlicher Wellenlänge abgeben,
und das in den aufgespannten Raum (4, 5, 6, 11) abgegebene Licht in der Summe auf das gemessene Absorptionsvermögen (Absorptionswellenlänge) der Solarzellen der Solarzellenmodule (1) abgestimmt ist.

2. Photovoltaikvorrichtung nach Anspruch 1, **dadurch gekennzeichnet, dass**
die Flat-plate-Solarzellenmodule (1) einen quaderförmigen (4, 5, 6) oder prismatischen Raum aufspannen mit offener und/oder geschlossener Seitenfläche.

3. Photovoltaikvorrichtung nach Anspruch 1 oder 2, **dadurch gekennzeichnet, dass**
die in den von den Solarzellenmodulen (1) aufgespannten Raum (4, 5, 6) strahlenden Leuchtmittel (3) im Kantenbereich (2) angeordnet sind.

4. Photovoltaikvorrichtung nach einem der Ansprüche 1 bis 3, **dadurch gekennzeichnet, dass**
die Leuchtmittel (3) in Leuchtmittelleisten (7) angeordnet sind, die die Wände zwischen zwei gegenüberliegenden Solarzellenmodulen (1) bilden.

5. Photovoltaikvorrichtung nach Anspruch 1, **dadurch gekennzeichnet, dass**
die Flat-plate-Solarzellenmodule (1) einen flachen spaltförmigen Raum (11) aufspannen, in dem eine Leuchtfolie (12) angeordnet ist.

6. Photovoltaikvorrichtung nach einem der Ansprüche 1 bis 3, **dadurch gekennzeichnet, dass**
Räume (4, 5, 6, 11), gebildet aus gegenüberliegenden Solarzellenmodulen (1) turmartig übereinander gestapelt sind.

7. Photovoltaikvorrichtung nach Anspruch 6, **dadurch gekennzeichnet, dass**
der oberste Solarzellenmodul (1) eines Turmes (8) auch nach außen weisende photovoltaische Zellen aufweist.

8. Photovoltaikvorrichtung nach einem der Ansprüche 1 bis 7, **dadurch gekennzeichnet, dass**
offene Seiten von aufgespannten Räumen (4, 5) außen Spiegel (9) aufweisen, die Sonnenlicht in das Rauminnere reflektieren.

9. Photovoltaikvorrichtung nach einem der Ansprüche 1 bis 8, **dadurch gekennzeichnet, dass**
Bestandteil der Solarzellenmodule (1) neben lichtabsorbierenden Zellen auch thermische Zellen sind oder thermische Zellen als gesonderte Solarzellenmodule angeordnet sind, so dass auch Wärmestrahlung verwertbar ist.

10. Photovoltaikvorrichtung nach einem der Ansprüche 1 bis 9, **dadurch gekennzeichnet, dass**
die turmartig angeordneten Räume (4, 5, 6, 11) in ein Traggerüst (10) eingehangen sind.

11. Photovoltaikvorrichtung mit einem Flat-plate-Solarzellenmodul, der durch mindestens ein Leuchtmittel beleuchtbar ist, dessen Wellenlänge den nutzbaren Spektralanteilen einer Solarzelle angepasst ist, **dadurch gekennzeichnet, dass**
auf dem Flat-plate-Solarzellenmodul (1) mit den photovoltaischen Zellen als Leuchtmittel eine Leuchtfolie (12) vollflächig oder streifenförmig angeordnet ist, wobei durch die Leuchtfolie (12) Licht verschiedener Wellenlänge abgebbar ist und das abgegebene Licht in der Summe auf das gemessene Absorptionsvermögen (Absorptionswellenlänge) der Solarzellen der Solarzellenmodule (1) abgestimmt ist.

12. Photovoltaikvorrichtung nach Anspruch 11, **dadurch gekennzeichnet, dass**
auf der Leuchtfolie (12) auf der den photovoltaischen Zellen abgewandten Seite eine Reflexionsschicht angeordnet ist.

13. Photovoltaikvorrichtung nach einem der Ansprüche 1 bis 12, **dadurch gekennzeichnet, dass**
mit Leuchtfolie (12) versehene Solarmodule (1) zu Räumen zusammengefügt sind oder zu Türmen (8) aufgeschichtet sind, Türme (8) auch in Kombination mit Räumen (4, 5, 6, 11).

14. Photovoltaikvorrichtung nach einem der Ansprüche 1 bis 13, **dadurch gekennzeichnet, dass**
die Solarmodule (1) beidseitig mit photovoltaischen Zellen bestückt sind.
